Europäisches Patentamt

European Patent Office

Office européen des brevets

(11) Publication number: **0 415 333 B1**

# EUROPEAN PATENT SPECIFICATION

(45) Date of publication of patent specification: **11.05.94**   (51) Int. Cl.5: **F16C  1/26**

(21) Application number: **90116419.4**

(22) Date of filing: **28.08.90**

(54) **Control cable.**

(30) Priority: **30.08.89 JP 101496/89**
**30.08.89 JP 101497/89**
**30.08.89 JP 101498/89**

(43) Date of publication of application:
**06.03.91 Bulletin  91/10**

(45) Publication of the grant of the patent:
**11.05.94 Bulletin  94/19**

(84) Designated Contracting States:
**DE FR GB IT**

(56) References cited:
**DE-A- 3 021 533**
**DE-U- 8 016 037**
**US-A- 3 013 443**
**US-A- 4 099 425**
**US-A- 4 378 712**

**PATENT ABSTRACTS OF JAPAN, vol. 13, no.
10 (M-782)(3358), 11 January 1989; & JP - A -
63219908 (HONDA MOTOR LTD.) 13.09.1988**

(73) Proprietor: **NIPPON CABLE SYSTEM INC.**
**12-28, Sakae-machi 1-chome**
**Takarazuka-shi Hyogo-ken(JP)**

(72) Inventor: **Tanaka, Masaki**
**2-21-7, Nanamatsu-cho**
**Amagasaki-shi, Hyogo-ken(JP)**
Inventor: **Yanagita, Takashi**
**1-23-3-103, Hohshogaoka**
**Nishinomiya-shi, Hyogo-ken(JP)**
Inventor: **Seki, Yasuo**
**131, Kamishinjo Hikami-cho**
**Hikami-gun, Hyogo-ken(JP)**
Inventor: **Sohma, Katsuyuki**
**3-18-5, Torigaikami**
**Settsu-shi, Osaka-fu(JP)**

(74) Representative: **DIEHL GLAESER HILTL &
PARTNER**
**Patentanwälte**
**Königstrasse 28**
**D-22767 Hamburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a control cable, and more particularly, to a control cable in which a liner is to be prevented from shrinking, and operating feeling is good, and besides, the liner is not easily slipped out of an outer spring.

A control cable comprises a conduit and an inner core or inner cable, and is a means for remotely controlling an object to be controlled by pulling, by pushing and pulling or by rotating the inner cable.

The above-mentioned conduit generally comprises what is called an armour or outer spring and an outer coat. The outer spring is made by roll-forming a steel wire to a flat strip and then by winding in abutting convolutions to form a coiled spring. Another type of conduit comprises plural steel wires which are laid side by side and wound helically to form a tubular member. The outer coat is a layer of plastic materials which covers and protects the outside surface of the conduit.

The inner cable which is inserted into the above-mentioned conduit comprises stranded wires obtained by twisting a plurality of wires or strands which are mutually twisted.

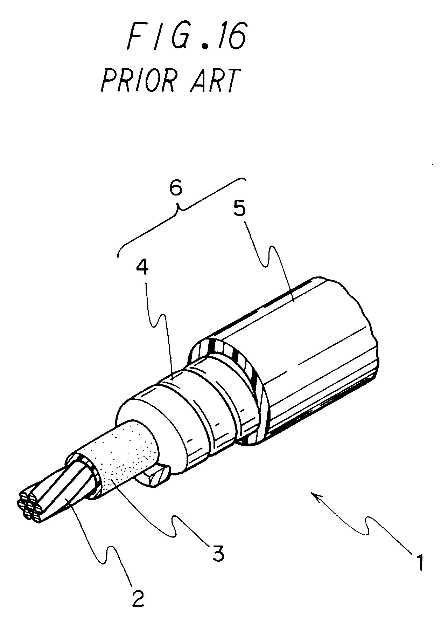

In such a control cable, the inside surface of the above-mentioned outer spring is rubbed with the inner cable. Therefore, the operating efficiency and the durability are much influenced by coefficient of friction and degree of abrasion between the outer spring and the inner cable. Therefore, in some cases, as shown in Fig. 16, a tubular liner 3 is set at the inside surface of the outer spring 4 in order to reduce the friction and the abrasion. The tubular liner is generally made of plastics the coefficient of friction of which is low and abrasion resistance is superior. The tubular liner can be closely set in the outer spring by winding a flat steel strip around the outside surface of the liner so that the liner is wrapped in the outer spring, or by inserting the liner into the conduit after having formed the outer spring in coil shape.

Recent temperatures in an engine room or engine compartment of an automobile and so on have become much higher than the temperatures heretofore. For example, 150°C under high temperature condition, and -40°C in a cold district. Under the condition that environment temperatures are severely high, trouble will occur as mentioned hereinafter.

Under the condition that the above-mentioned control cable is in close contact to the outer spring, and the control cable is heated, thermal expansion in the axial direction of the liner is restricted by the outer spring which has higher rigidity and lower coefficient of thermal expansion than the liner. Therefore, the liner cannot freely expand and release thermal stress thereof at high temperature. Contrary to that the liner can almost freely shrink when it is cooled. As a result of repeated rise and fall cycles of temperature, the liner shrinks successively and irreversibly in length.

In addition, when a liner is squeezed by the outer spring, unevenness of the inside surface of the outer spring, especially at junctions of adjacent strips creates problems and reduces, durability.

Therefore, in order to reduce the above mentioned disadvantages, a clearance more than 0.5 mm between the control cable and the outer spring is required when a liner is inserted into the outer spring. However, in this case, it is necessary to provide an additional mechanism so that the liner is not easy to slip out, for example, by making a flare portion at an end of the liner, or by putting a washer between the end of conduit and a member (e.g. cap member) to which the end of conduit is fixed.

On the other hand, with respect to the after-inserting type of conduit, even if there is a clearance between the liner and the outer spring, the liner cannot be easily inserted into the outer spring in case a control cable is long.

From DE-A-3 021 533 there is known a Bowden control cable comprising a taut wire, a sheathing for slidably guiding the taut wire consisting of a plastic sheathing surrounding a coiled spring wire, and an inner plastic tube. The plastic tube comprises inner ribs and outer ribs, as well. While the known Bowden control cable is designed for avoiding the transmission of vibrations from one end to the other end of the cable, the problems stated with reference to other types of cables are relevant here.

The object of the present invention is to avoid the above-mentioned disadvantages of the conventional control cable and to provide a control cable in which reversible thermal expansion and contraction of the liner is not hindered by the outer spring hence the liner is prevented from successive shrinking, unevenness and roughness do not create problems, and further, the liner cannot easily be slipped out of the outer spring.

The control cable of the present invention comprises an inner cable, a conduit and a liner for slidably guiding the inner cable. The conduit has an outer spring made of a coiled steel strip and an outer coat made of synthetic resin formed on the outside surface of the outer spring. The liner is set between the above-mentioned conduit and the inner cable with a clearance remaining between the above-mentioned outer spring and the liner, and an interposition is provided in the clearance. The interposition is set in order to keep a suitable clearance and to provide a suitable resistance for a relative motion between the liner and the outer spring and is made of a material different from that of the liner so that a thermal expansion and contraction of the liner is not hindered and nevertheless the liner cannot easily slip out of the outer spring.

With the control cable of the invention, since clearance is provided between the outer spring and the liner, and further, the specified interposition is set in the clearance, thermal expansion of the liner is not hindered when the control cable is heated. Therefore, the liner is able to be prevented from successive and irreversible shrinking when the control cable is repeatedly heated and cooled.

In addition, since the control cable has a clearance between the outer spring and the liner, the unevenness of the outer spring does not come out on the inside surface of the liner, and the inside surface is kept smooth in any cable arrangement. Therefore, the operating feeling of the control cable becomes better as compared with a conventional control cable. Further, since the interposition is inserted in the clearance, the liner cannot easily be slipped out of the outer spring.

In accordance with a first aspect of the invention, a foamed material is used as the above-mentioned interposition. The foamed material provides the advantage, for example, that the heat expansion (or shrinkage) is absorbed due to the shrinkage (or expansion) of the foamed material itself.

In accordance with a second aspect of the invention, a low melting-(or softening)-point material (hereinafter, referred to as "low melting-point material"), such as wax or resin is used as the above-mentioned interposition. In the above-mentioned control cable, the low melting-point material is preferably laid intermittently on the liner. However, the material can be extended continuously along the liner.

Further, in the control cable, the melting point or the softening point is preferably in the range from 40 to 100°C.

When the low melting-point material is employed as interposition, there is the advantage that the liner is not prevented from free thermal expansion since the low melting-point material is melted or softened at elevated temperatures.

In accordance with a third aspect of the present invention, a string-like member is interposed between the outer spring and the liner as an interposition or a spacer.

In the above-mentioned control cable, at least one string-like member is spirally wound around the liner or extends linearly along the liner. Further, in both cases, a plurality of members can be used, and a combination of a spirally wound member and a linearly extending member can be used. For example, a string-like member can be spirally wound around a liner with another linearly extending string-like member.

As string-like member, a twisted thread, a continuous long untwisted bundle of multi-filaments or mono-filament, or a tube can be employed.

With the control cable constructed as mentioned above, the string-like member is preferably a twisted thread impregnated with low melting-point material. In addition, a thread, filaments or a tube coated with the low melting-point material is also preferably employed as the string-like member.

When a string-like member is used as an interposition, a gap exists between the liner and the outer spring, and therefore, thermal expansions and contractions of the liner are not hindered due to the gap.

Hereinafter, referring to the accompanying drawings, some embodiments of the present invention will be explained.

Fig. 1 and Fig. 2 are partially-cut-off perspective views showing embodiments of the control cable of the present invention;

Fig. 3 and Fig. 4 are partially-cut-off perspective views of another embodiments of the control cable in a produced stage of the present invention;

Figs. 5 to 7 are partially-cut-off perspective views of further another embodiments of the control cable of the present invention;

Fig. 8 is a cross sectional view of an embodiment of an inner cable in the present invention;

Fig. 9 is an illustrative view of an apparatus for measuring slipping-out-strength of a liner of a control cable;

Fig. 10 is an illustrative view of an apparatus for measuring the operating feeling of a control cable;

Fig. 11, 12 and 13 are graphs showing the characteristic of the operating feeling of Examples of the control cable of the present invention;

Figs. 14 and 15 are graphs respectively showing the characteristic of the operating feeling of Comparative Examples; and

Fig. 16 is a partially-cut-off perspective view showing an example of conventional control cable.

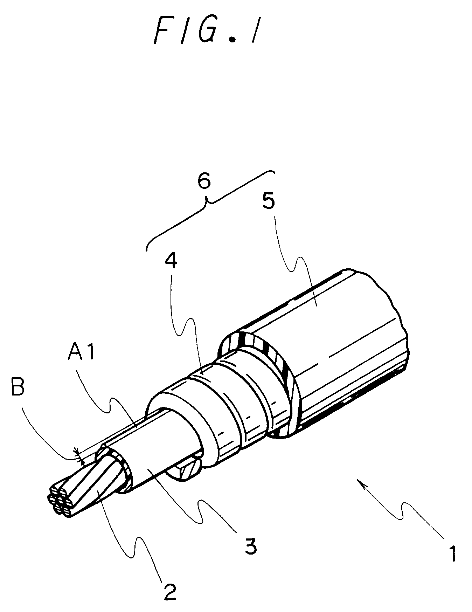

The control cable of the present invention has, for example a construction shown in Fig. 1. However, the control cable of the present invention is not limited to the shape of Fig. 1.

The control cable 1 of Fig. 1 comprises a conduit 6. The conduit 6 comprises an outer spring 4 which is a steel wire roll-formed such that the cross section becomes flat, and then spirally wound, and an outer coat 5 made of synthetic resin. The coat 5 is formed around the outside surface of the outer spring.

The control cable 1 includes further a tubular liner 3 which is made of synthetic resin with small coefficient of friction and superior abrasion resistance. The liner 3 is provided in the outer spring of the above-mentioned conduit 6 with a remaining clearance B.

Further, an inner core or inner cable 2 is slidably inserted through the conduit 6, i.e. through the liner 3. The inner cable 2 is generally made of plural steel wires which are mutually twisted. A foamed material A1 is set in the clearance B between the above-mentioned outer spring 4 and the liner 3 as the interposition. In case of Fig. 1, the foamed material A1 is substantially straight and extends along the liner 3 in axial direction. Furthermore, there may be two or more lines of linear foamed material A1.

The foamed material A1 is not only set straightly but also might be wound spirally around the liner 3.

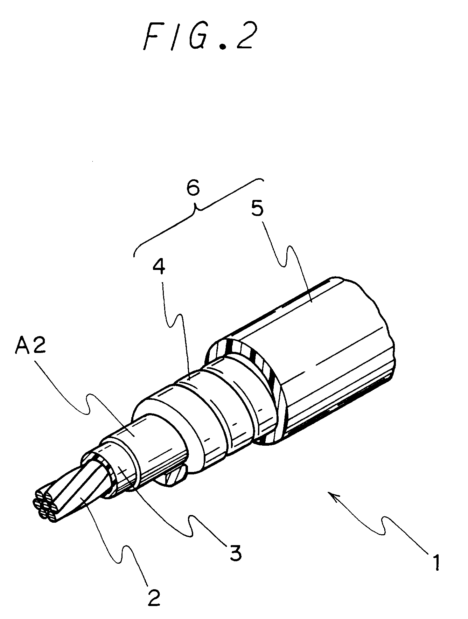

In the control cable shown in Fig. 2, the foamed material A2 has a tubular shape such that the liner 3 is covered with the foamed material A2.

In another case, the foamed material A2 may also be filled between the liner 3 and the outer spring 4.

Examples of the above-mentioned foamed material A1 are polyurethane, polyethylene, polypropylene, neopren, chloroprene, polystyrene, phenol, polyurea, polyvinyl chloride and the like.

The foamed material may not only be an open cell foam but also a closed cell foam. Expansion ratio of the foamed material is preferably 150 - 800 % and more preferably 200 - 500 %. As the material of the liner 3, tetrafluoroethylene/hexafluoropropylene copolymer polyacetal, and the like may preferably be employed. However, in the present invention, the material of the liner 3 is not limited to the above-mentioned polymer.

And the foamed material can be set between the outer spring and the liner continuously, intermittently on the liner 3. Further, a combination of continuously extending foamed material and intermittently extending foamed materials can also be used.

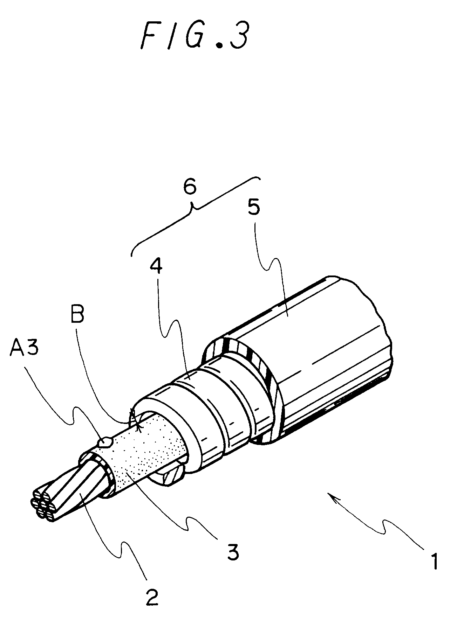

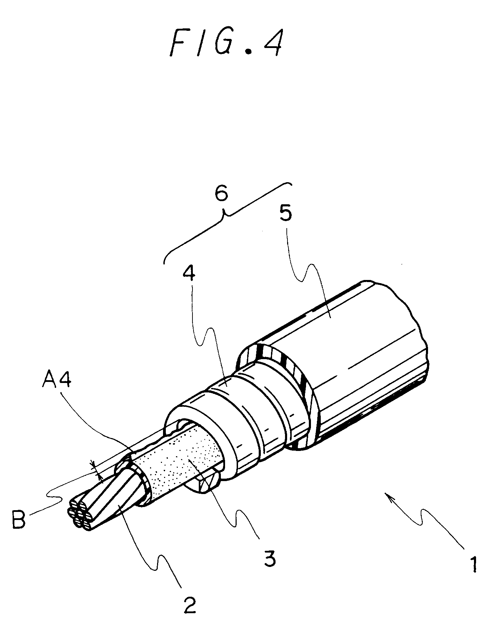

The control cable 1 shown in Figs. 3 and 4 is the same as the control cable 1 shown in Fig. 1 except that low melting-point material A3, A4 is set between the outer spring 4 and the liner 3.

As the above-mentioned low melting-point material, paraffin wax, saturated copolyesters, olefine copolymers (for example, ethylene-vinylacetate copolymer, ethylene-ethylacrylate copolymer), and hot melt adhesives (for example, plasticized compounds based on ethylene-vinylacetate copolymer, atactic polypropylene, copolyesters, synthetic rubbers) are mentioned. However, in the present invention, the material is not limited to the above-mentioned wax and resins, and other thermoplastic resins with low melting (or softening) point can be used.

The above-mentioned low melting-point material is set as an interposition of intermittently (see Fig. 3) or continuously (see Fig. 4) provided material or a combination of intermittently provided material and continuously provided material, before the outer spring 4 is wound around the liner 4.

When the thickness of the above-mentioned material is not less than double of the clearance between the above-mentioned outer spring 4 and the liner 3, the material is melted or softened with heat, when the outer spring 4 is closely wound around the liner 3. Then, the resin advantageously is left as a film or a coat.

The preferable range of the melting point or the softening point of the material is 40 to 100°C. That is to say, in case that the melting point or softening point is more than 100°C, the material dropped on the liner 3 is not melted or softened with heat when the heated steel strip is closely coiled around the liner 3 to form an outer spring.

Therefore, the outer spring 4 is pushed on the liner 3, and an unevenness tends to come out on the inside face of the liner 3. On the contrary, if the melting point or softening point is not larger than 40°C, the fixing force (adhesive force) between the low melting material and the liner 3 can be inferior.

The above-mentioned melting point is the temperature in which a solid becomes liquid by absorbing heat under a condition that a pressure is applied, and the above-mentioned softening point is the temperature in which a material becomes soft and a mechanical property (strength, or the like) of the material becomes low. The measuring methods for determining the melting point and the softening point are described hereinbelow.

The melting point can be determined, for example, in accordance with "method of measuring a transition point of a plastic in The American Society for Testing and Materials (ASTM D 3418)". That is, at first a differential scanning calorimetry is performed, and melting temperature is found. Then the temperature is determined as the melting point of the material.

The softening point can be determined, for example, in accordance with ring and ball method (ASTM D 36-86,ASTM E28-67). That is to say, a melted sample is poured into a brass ring having a predetermined size, and then is cured. Next, a steel ball having a constant volume is put on the cured sample. Then, by heating the sample in a heated oil tank, the temperature when the ball drops through the sample is determined as the softening point.

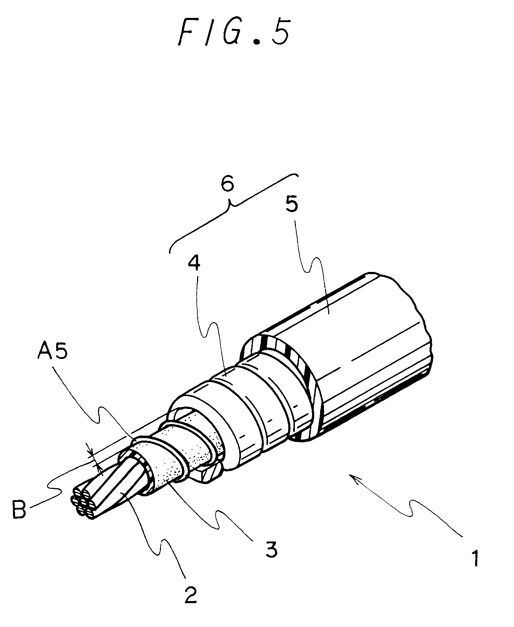

Next, some embodiments of the control cable of the present invention in which a string-like member is used as an interposition will be explained with reference to Figs. 5 to 7.

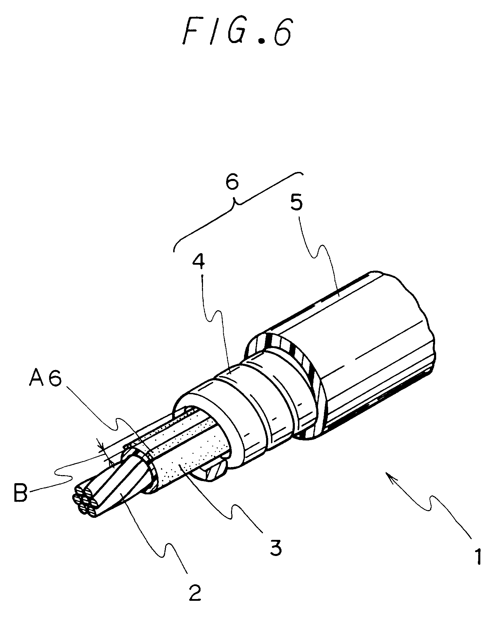

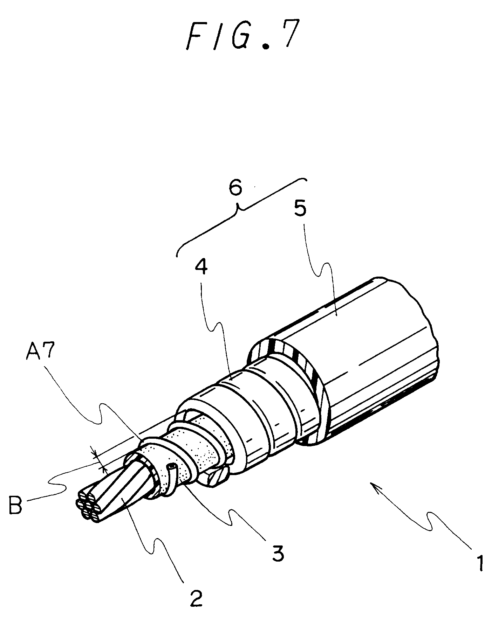

Conduits 6, inner cables 2 and liners 3 of the control cables 1 of Figs. 5 to 7 are fundamentally the same as the control cables shown in Figs. 1 and 2. Each of the string-like members A5, A6 and A7 is set between the above-mentioned outer spring 4 and the liner 3 as an interposition. The string-like member might be not only wound spirally on the outside surface of the liner 3 as shown in Figs. 5 and 7, but also might be set rectilinearly along the liner 3 as shown in Fig. 6.

The above-mentioned string-like member is able to be formed spirally and linearly.

As the above-mentioned string-like member, a twisted thread or thread plying (A5 of Fig. 5), a bundle of filaments (A6 of Fig. 6), and a tube (A7 of Fig. 7) are mentioned. Examples of the material of the thread are, polyester, cotton yarn, and the like. Examples of the materials of the filament and the tube are a plastic (e.g. polyester, polyethylene, polyamide, polyacetal), thermoplastic elastomer (e.g. polyurethane, polyolefine elastomer, polyester elastomer, polyamide elastomer, polyvinylchroride elastomer, styrene elastomer, nitrile elastomer, chrorinated polyethylene) and a rubber material (ethylen-propylene rubber, butyl rubber, silicone rubber, urethane rubber, natural rubber).

The diameter of the above-mentioned string-like member is preferably 1.2 to 3 times of the dimension of the clearance B between an outer spring 4 and a liner 3. That is to say, when the diameter is less than 1.2 times of the clearance B, the liner 3 is respectively easily slipped out of the outer spring. On the contrary, when the diameter is more than three times of the clearance B, an unevenness tends to come out on the inside surface of the liner, since the liner 3 abuts the outer spring.

In case that the filaments A2 and the tube A3 are used, the diameter of the string-like member preferably has a diameter of 1 to 2 times of the clearance. When the diameter is less than the clearance B, the liner 3 tends to easily slip out of the outer spring 4, and when the diameter is more than the double clearance B, an unevenness tends to come out on the inside surface of the liner 3 since the liner 3 is compressed by the outer spring 4.

It is preferable that the inside diameter of the tube has a value not less than the remainder obtained by subtracting the clearance from the diameter. When the inside diameter is less than the remainder, an unevenness tends to come out on the inside surface of the liner since the tube A3 is lacking deformation quantity.

That is to say, even if the inside diameter of the tube is squeezed, the outer spring clamps the tube more than the squeezed dimension, since the thickness of tube is larger than the clearance.

The above-mentioned twisted thread A5, the filament A6 and the tube A7 are preferably impregnated or coated with low melting-point material. The low melting-point materials are selected from, for example, paraffin, saturated copolyester, ethylene-vinyl acetate copolymer and polyolefine resins.

The melting point and softening point of the low melting-point material are preferably 40 to 100°C. In case that the melting point or the softening point is more than 100°C, the material is not easily melted or softened with the heat of outer spring when the outer spring is wound around the liner. Therefore, the material is pressed on the liner, and an unevenness might come out on the inner surface of the liner. When melting point is less than 40°C, the fixing force of the material to the liner 4 is not sufficient, and the low melting-point material tends to easily come off from the liner. The preferable range of the above-mentioned melting point and softening point are the same as the above cases explained in relation to Figs. 3 and 4.

Hereinafter, the control cable of the present invention and the technical effect are explained in detail with comparing some examples and comparative examples.

Example 1

The control cable of Example 1 has a construction shown in Fig. 1, and is prepared as mentioned hereinafter.

An available high-carbon steel wire (Grade No. 1060 in ASTM A510) with 1.8 mm diameter, is roll-formed to obtain a flat steel strip with 1.00 mm (thickness) x 2.45 mm (width).

A liner 3 was separately prepared by extruding a synthetic resin (tetrafuluoroethyrene/hexafuluoropropylene copolymer) to obtain a tubular shape having 3.00 mm in inside diameter and 3.80 mm in outside diameter.

Next, a string-like polyulethan foam A1 having a width of 1.0 mm and a thickness of 1.0 mm was provided on the liner 3 so as to extend along the liner 3.

Next, the above-mentioned steel strip was wound around the liner 3 with the foam A1 to form an outer spring 4 having an outside diameter of 6.30 mm and an inside diameter of 4.30 mm. A clearance of 0.5 mm remains between the outer spring 4 and the liner 3. That is to say, the polyulethan foam A1 is compressed by 0.5 mm.

Finally, another synthetic resin (polypropylene resin) is provided on the outer spring to form a coat 5. Thereby the conduit and the liner of Example 1 were obtained.

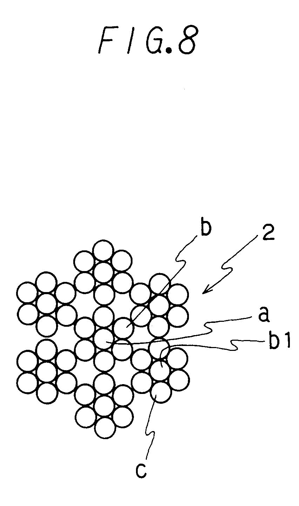

The inner cable 2 of the control cable of Example 1 has a cross section shown in Fig. 8 and was prepared as mentioned hereinafter.

At first, a steel wire (diameter 1.35 mm) galvanized with zinc was drawn to obtain a core wire (diameter: 0.35 mm) $\underline{a}$ of a core strand, a side wire (diameter: 0.30 mm) $\underline{b}$ of a core strand, a core wire $\underline{b}$ (diameter: 0.30 mm) of a side strand, and a side wire $\underline{c}$ (diameter 0.265 mm) of a side strand.

Then, a core wire $\underline{a}$ and six side wires $\underline{b}$ are twisted to obtain a core strand, and a core wire $\underline{b}1$ and six side wires $\underline{c}$ are twisted to obtain a side strand. Next, one core strand and six side strands are twisted to obtain an inner cable with 7 x 7 (see Fig. 8) construction and a total diameter of 2.50 mm.

Example 2

A control cable 1 of Example 2 shown in Fig. 2 was prepared in the same process as Example 1 except that the liner 3 was fully coated with polyurethan foam A2 of which thickness is 0.5 mm. In this case, the polyurethan foam A2 is compressed to 0.25 mm in thickness.

Comparative Example 1

In the control cable of Comparative Example 1, the polyurethan foam A1 of Example 1 was not interposed between the outer spring 4 and the liner 3. Further, an outer spring having outside diameter of 5.50 mm and the inside diameter of 3.50 mm and a liner 3 having outside diameter of 3.8 mm were used. Therefore, there was -0.3 mm clearance B between the outer spring and the liner, and the liner 3 is radially compressed with 0.3 mm. The remaining parameters were the same as in Example 1.

Comparative Example 2

In the control cable of the comparative example 2, the above-mentioned foam material A1 was not provided as an interposition between the outer spring 4 and the liner 3. The outside dimention of the liner 3 was 3.8 mm, and the outer spring 4 was wound such that the inside diameter was 3.90 mm and the outside diameter was 5.90 mm. Therefore, the clearance B between the outer spring 4 and the liner 3 was 0.1 mm.

The remaining parameters were the same as in Example 1.

Example 3

As shown in Fig. 3, melted paraffin wax drops each having a diameter of 0.3 to 0.5 mm were intermittently dropped on the same liner 3 as in Example 1 at intervals of 50 mm. Paraffin wax has a melting point of 47°C.

Next, the steel strip was wound spirally such that the inside diameter was 3.90 mm and the outside diameter was 5.9 mm. The steel strip was the same as in Example 1.

The clearance B is a gap between the liner 3 and the outer spring 4, when the liner 3 is shifted towards one side as shown in Fig. 3, and was 0.10 mm.

Example 4

Referring to Fig. 4, a control cable of Example 4 was prepared by almost the same process as Example 3. However, a saturated polyester resin the melting point of which is 75°C was used as a low melting material. Besides, the clearance B was 0.1 mm.

Example 5

A control cable 1 of Example 5 was prepared by the same process as Example 3 except that a hot melt resin A3 of ethylenevinylacetate copolymer type was used as a low melting material, the melting point of which was 80°C and the resin was continuously dropped on the liner so that the height of drops was 0.2 to 0.5 mm.

Example 6

A control cable 1 of Example 6 was prepared by the same process as in Example 3 except that polyester resin A4 the melting point of which was 85°C was used, and the resin was continuously dropped such that the height of drops was 0.2 to 0.5 mm as shown in Fig. 4.

Comparative Example 3

A control cable 1 of the Comparative Example 3 was prepared by the same process as in Example 3 except that the low melting material was not interposed between the outer spring 4 and the liner 3, and the clearance between the outer spring 4 and the liner 3 was -0.1 mm.

In this case, the liner 3 was compressed for 0.1 mm, and the outer spring 4 was closely in contact with the liner 3.

Comparative Example 4

A control cable 1 of the Comparative Example 4 is prepared by the same process as in Example 3 except that no interposition was employed. In this case the clearance B was 0.1 mm.

Example 7

A control cable 1 of Example 7 was prepared by the same process as in Example 1 except for the points mentioned hereinafter.

Referring to Fig. 5, a twisted thread A5, which was made of polyester and had a diameter of 0.15 mm, was wound spirally with a spiral pitch of 50 mm on the same liner 3 as Example 1. The liner 3 had a diameter of 3.80 mm. Then, the same base wire as in Example 1 was wound such that the inside diameter was 3.90 mm and the outside diameter was 5.90 mm. In this case, the clearance B was 0.1 mm.

Example 8

Referring to Fig. 6, a control cable 1 of Example 8 was prepareed by the same process as in Example 7 except that a bundle of filaments A6 of polyamide was straightly arranged on the liner as a string-like member.

Example 9

A control cable 1 of Example 9 was prepared by the same process as in Example 7 except that a tube A3 was used as the string-like member. The material of the tube A3 was polyurethane, the outside diameter of the tube was 0.20 mm, and the inside diameter was 0.10 mm.

Example 10

A control cable 1 of Example 10 was prepared by the same process as in Example 7 except that a twisted thread A5 was straightly provided on the liner as a string-like member.

Example 11

A control cable 1 of Example 11 was prepared by the same process as in Example 7 except that the twisted thread A5 was previously impregnated with a saturated polyester resin, the melting point of which is 75°C.

Example 12

A control cable 1 of Example 12 was prepared by the same process as in Example 8 except that the polyamide filaments A6 were coated with a saturated polyester resin.

Example 13

A control cable 1 of Example 13 was prepared by the same process as in Example 9 except that the tube A3 was coated with a saturated polyester resin the melting point of which is 75 °C.

Regarding the above-mentioned Examples 1 to 13 and Comparative Examples 1 to 4, the slipping-out-strength of the liner and the operating feeling were measured at room temperature as mentioned hereinafter.

Measuring method of slipping-out-strength and operating feeling

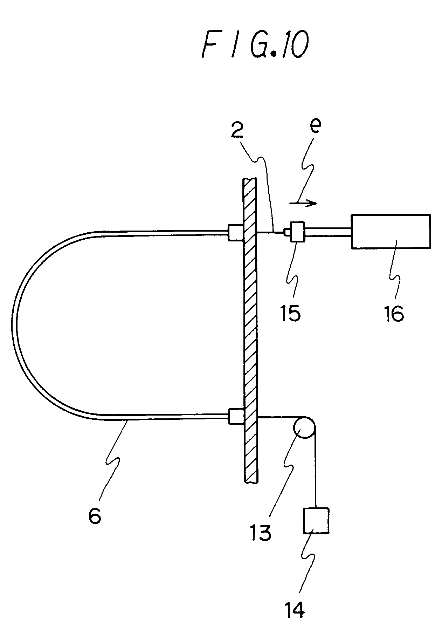

As shown in Fig. 10, conduits 6 of the abovementioned Examples and Comparative Examples were cut so that each length of the conduits was 600 mm.

Next, coat 5 of covering material was peeled off in a range from the end of the conduit over 50 mm length, and the outer spring 4 was cut so that only the liner was exposed.

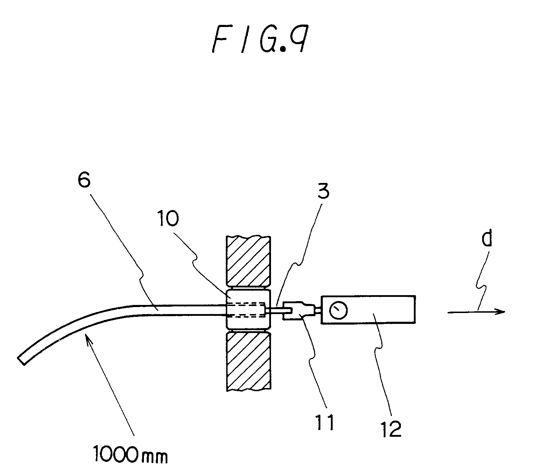

Next, the end of the conduit 6 from which the liner 3 was projected was fixed by means of a jig 10 as shown in Fig. 9 such that the liner could not move. Then, the top end of the liner 3 was fixed with a chuck 11, and was straightly pulled in the direction of the arrow d by a push-pull-scale 12. Then, the maximum tension strength was measured.

The conduit 6 was arranged in an easy curve having a bending radius of 1000 mm.

The measuring method of the characteristic of the operating feeling is shown in Fig. 10. The inner cable applied with silicone grease had a length of 1000 mm, and the inner cable 2 was inserted into the conduit 6 having a length of 700 mm. The thus obtained control cable 1 was arranged such that a control cable 1 was curved for 180° with a radius of 100 mm in U-like shape.

At the output end of the inner cable, a weight 14 of 5 kg is hung over a roller 13, and at the input end of the inner cable, a lineared motor 16 with a load cell 15, which was the load detector, was connected.

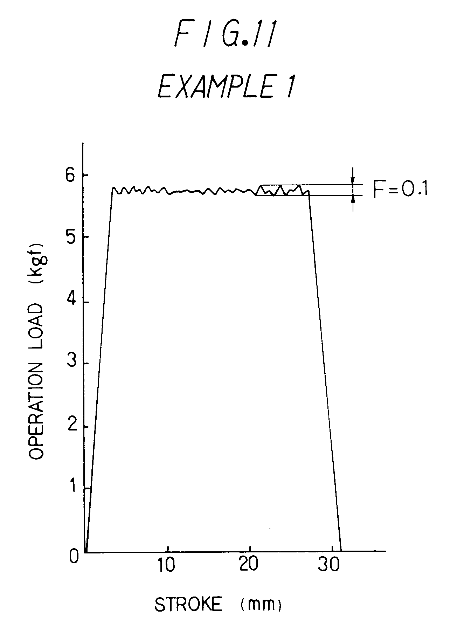

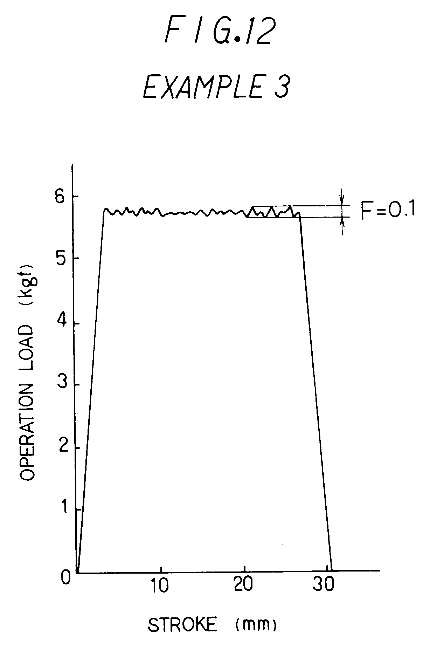

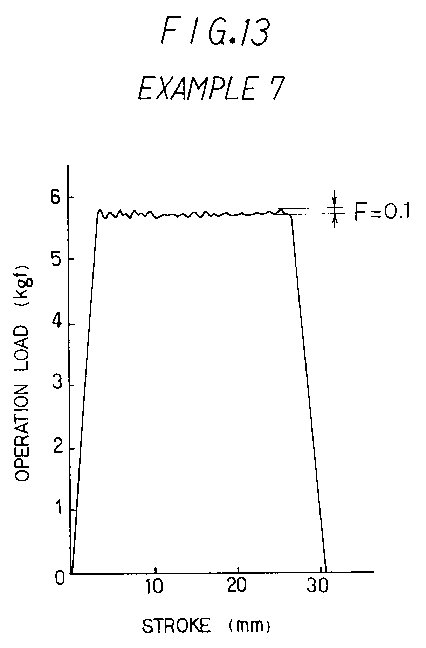

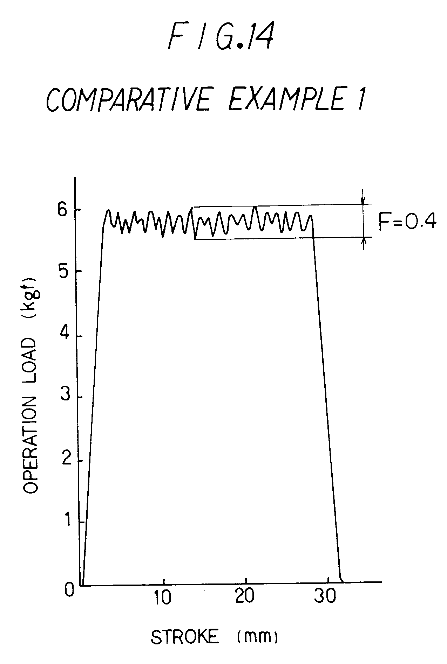

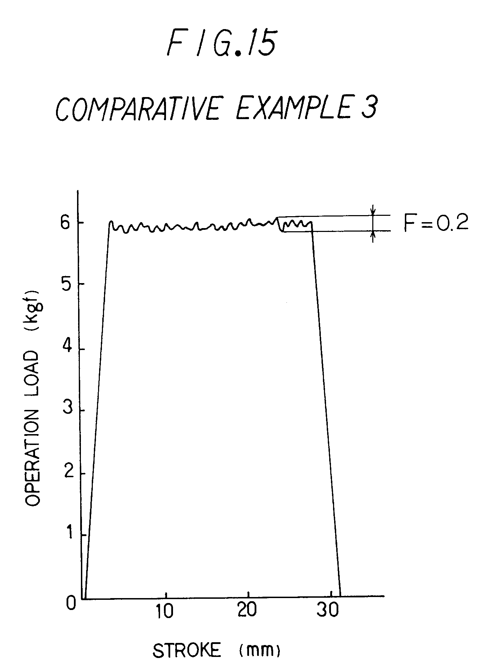

The inner cable 2 was pulled in the direction of an arrow e by means of the lineared motor, such that the velocity was 5 mm/sec and the stroke was 30 mm. The sliding motion was repeated ten times, and thereafter, a real pull test was performed. The behavior of the slide motion was recorded on an X-Y recorder connected to a load cell 15 (not shown). In the present specification, the difference between the maximum operating force and the minimum operating force, during the pull motion of the inner cable is determined as a characteristic of the operating feeling value F. Some examples of the results drawn by the X-Y recorder and the "F" are shown in Figs. 11 to 13 and Figs. 14 and 15. Fig. 11, Fig. 12 and Fig. 13 show the characteristic curves and the value F of the operating feeling of Example 1, Example 3 and Example 7, respectively. Fig. 14 and Fig. 15 show the curves and the value F of Comparative Example 1 and Comparative Example 3, respectively. The obtained results of the slipping-out-strength of the liner and the characteristic of the operating feeling of the control cables of the above-mentioned Examples 1 to 13 and Comparative Examples 1 to 4 are shown in Table 1.

## Table 1

| | Slipping-out-strength of liner in units*) | Characteristic value of the operating feeling in units *) |
|---|---|---|
| Ex. 1 | 13 | 0.2 |
| Ex. 2 | 16 | 0.1 |
| Ex. 3 | 4.0 | 0.1 |
| Ex. 4 | 5.0 | 0.1 |
| Ex. 5 | 7.0 | 0.1 |
| Ex. 6 | 5.0 | 0.1 |
| Ex. 7 | 4.5 | 0.1 |
| Ex. 8 | 5.0 | 0.12 |
| Ex. 9 | 5.0 | 0.1 |

- continued -

- continued -

| | Slipping-out-strength of liner in units*) | Characteristic value of the operating feeling in units *) |
|---|---|---|
| Ex. 10 | 4.0 | 0.1 |
| Ex. 11 | 5.0 | 0.1 |
| Ex. 12 | 6.0 | 0.1 |
| Ex. 13 | 8.0 | 0.1 |
| Com.Ex. 1 | 10 | 0.4 |
| Com.Ex. 2 | 2.0 | 0.1 |
| Com.Ex. 3 | 5.0 | 0.2 |
| Com.Ex. 4 | 2.0 | 0.1 |

*) 1 unit corresponds to 9,81 N

Generally, the slipping-out-strength should not be less than ~20N (2 kgf) in order to securely fix the liner to the outer spring, when another thermoplastic resin is molded at the end face of a conduit for the secondary processing.

In accordance with the results shown in Table 1, the slipping-out-strength of the liner of Examples 1 and 2 having the above-mentioned foamed material as an interposition, is ~130 and ~160N (13 and 16 kgf), respectively. However, the slipping out strength of the Comparative Example 1 having the same clearance of -0.3 mm as Examples 1 and 2 is ~100N (10 kgf). Therefore, the strength of the Comparative Example 1 is inferior to that of Examples 1 and 2.

As to the characteristic of the operating feeling, Examples 1 and 2 are ~1 and ~2N (0.1 and 0.2 kgf), respectively. However, Comparative Example 1 is ~4N (0.4 kgf). Therefore, the characteristic of the operating feeling of Comparative Example 1 is inferior to that of Examples 1 and 2. Furthermore, in Comparative Example 2, where clearance B is made to 0.1 mm in order to make the characteristic of the operative feeling be ~1N (0.1 kgf), the slipping-out-strength of liner becomes merely ~20N (2 kgf).

Next, the slipping-out-strength of the liner of Examples 3 to 6 having the above-mentioned low melting material as an interposiion, is ~40 to 70N (4.0 to 7.0 kgf). However, the slipping-out-strength of Comparative Example 4 having the same clearance as Example 4 has a strength of ~20N (2.0 kgf). That is to say, the strength of Comparative Example 4 is inferior to that of Examples 3 to 6.

As to the characteristic of the operating feeling, Examples 3 to 6 and Comparative Example 4 are ~1N (0.1 kgf), respectively. However that of Comparative Example 3 is ~2N (0.2 kgf). That is to say, the characteristic of the operating feeling is inferior to that of Example 3 to 6.

Further, the slipping-out-strength of the liner of Examples 7 to 13 having the above-mentioned string-like member as an interposition, is in the range of ~40 to ~80N (4.0 to 8.0 kgf). However, the slipping-out-strength of Comparative Example 4 having the same clearance of 0.1 mm as Example 7 to 13 was merely ~20N (2.0 kgf). That is to say, the strength of Comparative Example 4 is inferior to that of Examples 7 to 13.

As to the characteristic of the operating feeling, Examples 7 to 13 are ~1 to 1,2N (0.1 to 0.12 kgf). However, in the Comparative Example 4, the characteristic is ~1N (0.1 kgf). Therefore, it can be understood that the characteristic of the operating feeling of Comparative Example 4 is nearly equal to that of Example 7 to 13.

As discussed above, in the control cable of the present invention, the characteristic of operating feeling is good and the slipping-out-strength can be sufficiently retained, and it can be understood that this effect is obtained since in the control cables of Example 1 to 13, the interpositions are interposed between the outer spring 4 and the liner 3, the liner is not hindered from thermal expansion by the outer spring when the control cable is heated, and therefore, the liner is prevented from shrinking when the control cable is cooled, and further since the roughness and an unevenness do not come out on the liner 4 in the control cables of the Examples.

The control cable of the present invention is able to prevent shrink of the liner when the control cable is cooled, since the thermal expansion of the liner is not hindered by the outer spring when the control cable is heated. In addition, the operating feeling of the control cable of the present invention is good in comparison with conventional control cables.

Furthermore, the slipping-out-strength of the liner from the outer spring can be retained without providing any additional mechanism.

Though several embodiments of the invention are described above in detail, it is to be understood that the present invention is not limited to the above-mentioned embodiments, and various changes and modifications may be made in the invention without departing from the scope of the appended claims.

**Claims**

1. A control cable (1) comprising:

   (a) an inner cable (2);
   (b) a conduit (6) for slidably guiding the inner cable (2);
   (c) a tubular liner (3) provided in the conduit (6); and
   (d) an interposition (A1 to A7);
   said conduit (6) comprising:
      (b-1) an outer spring (4) made by winding a steel strip around the liner (3) with a clearance remaining between the outer spring (4) and the liner (3); and
      (b-2) a coat (5) made of synthetic resin formed on the outer spring (4); and
   said interposition (A1 to A7) being set between said outer spring (4) and said liner (3) in order to keep said clearance and to provide a suitable resistance to a relative motion between the liner (3) and the outer spring (4) characterized in that said liner (3) and said interposition (A1 to A7) are made of different material so that thermal expansion and contraction of the liner (3) is not hindered and nevertheless the liner cannot easily slip out of the outer spring (4).

2. Control cable according to Claim 1 wherein said interposition (A1,A2) is made of a foamed material.

3. Control cable according to Claim 2 wherein said foamed material is a substantially straight strip and extends along the liner (3) in an axial direction.

**4.** Control cable according to Claim 2 wherein said liner (3) is coated with the foamed material.

**5.** Control cable according to Claim 1 wherein said interposition (A3,A4) is made of a low melting-point material.

**6.** Control cable according to Claim 5 wherein said low melting-point material is laid intermittently in axial direction on the liner (3).

**7.** Control cable according to Claim 5 wherein said low melting-point material is a substantially straight strip and extends along the liner (3) continuously in axial direction.

**8.** Control cable according to Claim 5, wherein the melting point or softening point of the low melting-point material is in the range from 40 to 100 °C.

**9.** Control cable according to Claim 1, wherein said interposition (A5,A6,A7) is a string-like member which is provided along the liner (3).

**10.** Control cable according to Claim 9, wherein said string-like member is spirally wound around the liner (3).

**11.** Control cable according to Claim 9, wherein said string-like member straightly extends along the liner (3).

**12.** Control cable according to Claim 9, wherein said string-like member is a twisted thread.

**13.** Control cable according to Claim 9, wherein said string-like member is a continuous long untwisted bundle of filaments.

**14.** Control cable according to Claim 9, wherein said string-like member is a mono-filament.

**15.** Control cable according to Claim 9, wherein said string-like member is a tube.

**16.** Control cable according to Claim 9, wherein said string-like member is impregnated with low melting-point material.

**17.** Control cable according to Claim 15, wherein the melting or softening point of the low melting-point material is in the range from 40 to 100 °C.

**18.** Control cable according to Claim 9, wherein said string-like member is coated with low melting-point material.

**19.** Control cable according to Claim 18, wherein the melting or softening point of the low melting-point material is in the range from 40 to 100 °C.

**Patentansprüche**

**1.** Steuerkabel (1) aufweisend:
   (a) ein inneres Seil (2);
   (b) einen rohrförmigen Teil (6) zum verschiebbaren Führen des inneren Seiles (2);
   (c) eine rohrförmige Auskleidung (3), die in dem rohrförmigen Teil (6) vorgesehen ist; und
   (d) eine Zwischenlage (A1-A7);
   wobei der rohrförmige Teil (6) aufweist:
      (b-1) eine äußere Feder (4), welche durch Wickeln eines Stahlstreifens um die Auskleidung (3) mit einem Zwischenraum zwischen der äußeren Feder (4) und der Auskleidung (3) hergestellt worden ist; und
      (b-2) einen Überzug (5), der aus einem synthetischen Harz an der äußeren Feder (4) gebildet worden ist; und
   die Zwischenlage (A1-A7) zwischen der äußeren Feder (4) und der inneren Auskleidung (3)

11

zwischengesetzt ist, um den Zwischenraum bzw. das Spiel aufrechtzuerhalten und um einen zweckmäßigen Widerstand gegenüber einer Relativbewegung zwischen der Auskleidung (3) und der äußeren Feder (4) zu schaffen, dadurch gekennzeichnet, daß die Auskleidung (3) und die Zwischenlage (A1-A7) aus unterschiedlichem Material hergestellt worden sind, so daß die thermische Ausdehnung und Zusammenziehung der Auskleidung (3) nicht behindert wird und dennoch die Auskleidung nicht leicht aus der äußeren Feder (4) herausgleiten kann.

2. Steuerkabel nach Anspruch 1, dadurch gekennzeichnet, daß die Einlage (A1, A2) aus geschäumten Material besteht.

3. Steuerkabel nach Anspruch 2, dadurch gekennzeichnet, daß das geschäumte Material ein im wesentlichen geradliniger Streifen ist und sich längs der Auskleidung (3) in einer axialen Richtung erstreckt.

4. Steuerkabel nach Anspruch 2, dadurch gekennzeichnet, daß die Auskleidung (3) mit dem geschäumten Material überzogen ist.

5. Steuerkabel nach Anspruch 1, dadurch gekennzeichnet, daß die Zwischenlage (A3, A4) aus einem Material mit niedrigem Schmelzpunkt gemacht ist.

6. Steuerkabel nach Anspruch 5, dadurch gekennzeichnet, daß das Material mit niedrigem Schmelzpunkt intermittierend in axialer Richtung an die Auskleidung (3) gelegt ist.

7. Steuerkabel nach Anspruch 5, dadurch gekennzeichnet, daß das Material mit niedrigem Schmelzpunkt ein im wesentlichen sich geradlinig erstreckender Streifen ist und sich längs der Auskleidung (3) kontinuierlich in axialer Richtung erstreckt.

8. Steuerkabel nach Anspruch 5, dadurch gekennzeichnet, daß der Schmelzpunkt oder Erweichungspunkt des Materials mit niedrigem Schmelzpunkt im Bereich von 40 bis 100°C liegt.

9. Steuerkabel nach Anspruch 1, dadurch gekennzeichnet, daß die Zwischenlage (A5, A6, A7) ein federartiger Teil ist, welcher längs der Auskleidung (3) vorgesehen ist.

10. Steuerkabel nach Anspruch 9, dadurch gekennzeichnet, daß der federartige Teil spiralenförmig um die Auskleidung (3) gewickelt ist.

11. Steuerkabel nach Anspruch 9, dadurch gekennzeichnet, daß der federartige Teil sich längs der Auskleidung (3) geradlinig erstreckt.

12. Steuerkabel nach Anspruch 9, dadurch gekennzeichnet, daß der federartige Teil ein gedrehter oder verdrallter Faden ist.

13. Steuerkabel nach Anspruch 9, dadurch gekennzeichnet, daß der federartige Teil als kontinuierliches langes, nicht verdralltes Bündel aus Fasern ist.

14. Steuerkabel nach Anspruch 9, dadurch gekennzeichnet, daß der federartige Teil ein Monofaden ist.

15. Steuerkabel nach Anspruch 9, dadurch gekennzeichnet, daß der federartige Teil ein Rohr ist.

16. Steuerkabel nach Anspruch 9, dadurch gekennzeichnet, daß der federartige Teil mit einem Material mit niedrigem Schmelzpunkt imprägniert ist.

17. Steuerkabel nach Anspruch 15, dadurch gekennzeichnet, daß der Schmelz- oder Erweichungspunkt des Materials mit dem niedrigen Schmelzpunkt im Bereich von 40 bis 100°C liegt.

18. Steuerkabel nach Anspruch 9, dadurch gekennzeichnet, daß der federartige Teil mit einem Material mit niedrigem Schmelzpunkt überzogen ist.

**19.** Steuerkabel nach Anspruch 18, dadurch gekennzeichnet, daß der Schmelz- oder Erweichungspunkt des Materials mit niedrigem Schmelzpunkt im Bereich von 40 bis 100 °C liegt.

**Revendications**

**1.** Un câble de commande (1) comprenant:
(a) un câble intérieur (2);
(b) un conduit (6) de guidage à coulissement du câble intérieur (2);
(c) un chemisage tubulaire (3) disposé dans le conduit (6); et
(d) un intercalaire (A1 à A7);
le dit conduit (6) comprenant:
(b-1) un ressort extérieur (4) constitué par un enroulement d'une bande d'acier autour du chemisage (3) un jeu subsistant entre ce ressort extérieur (4) et le chemisage (3); et
(b-2) un revêtement (5) en résine synthétique formé sur le ressort extérieur (4); et
ledit intercalaire (A1 à A7) étant placé entre ledit ressort extérieur (4) et ledit chemisage (3) de manière à maintenir ledit jeu et à procurer une résistance appropriée à un mouvement relatif entre le chemisage (3) et le ressort extérieur (4),
caractérisé en ce que ledit chemisage (3) et ledit intercalaire (A1 à A7) sont en des matières différentes, de sorte qu'une dilatation et une contraction thermiques du chemisage (3) ne sont pas empêchées et que le chemisage ne peut cependant pas glisser facilement hors du ressort extérieur (4).

**2.** Câble de commande selon la revendication 1 dans lequel ledit intercalaire (A1, A2) est en matière expansée.

**3.** Câble de commande selon la revendication 2, dans lequel ladite matière expansée est une bande sensiblement droite et s'étend le long du chemisage (3) dans une direction axiale.

**4.** Câble de commande selon la revendication 2 dans lequel ledit chemisage (3) est revêtu de la matière expansée.

**5.** Câble de commande selon la revendication 1 dans lequel ledit intercalaire (A3, A4) est en une matière à bas point de fusion.

**6.** Câble de commande selon la revendication 5 dans lequel ladite matière à bas point de fusion est disposée de façon interrompue en direction axiale du chemisage (3).

**7.** Câble de commande selon la revendication 5, dans lequel ladite matière à bas point de fusion est une bande sensiblement droite et s'étend en continu le long du chemisage (3) en direction axiale.

**8.** Câble de commande selon la revendication 5, dans lequel le point de fusion ou le point de ramollissement de la matière à bas point de fusion est dans la plage de 40 ° à 100 °C.

**9.** Câble de commande selon la revendication 1, dans lequel ledit intercalaire (A5, A6, A7) est un élément en forme de corde qui est disposé le long du chemisage (3).

**10.** Câble de commande selon la revendication 9, dans lequel ledit élément en forme de corde est enroulé en spirale autour du chemisage (3).

**11.** Câble de commande selon la revendication 9 dans lequel ledit élément en forme de corde s'étend de manière rectiligne le long du chemisage (3).

**12.** Câble de commande selon la revendication 9, dans lequel ledit élément en forme de corde est un fil retors.

**13.** Câble de commande selon la revendication 9, dans lequel ledit élément en forme de fil est un long faisceau continu, non retors, de filaments.

**14.** Câble de commande selon la revendication 9, dans lequel ledit élément en forme de corde est un monofilament.

**15.** Câble de commande selon la revendication 9 dans lequel ledit élément en forme de corde est un tube.

**16.** Câble de commande selon la revendication 9, dans lequel ledit élément en forme de corde est imprégné de matière à bas point de fusion.

**17.** Câble de commande selon la revendication 15, dans lequel de fusion ou le point de ramollissement de la matière à bas point de fusion est dans la plage comprise entre 40 et 100°C.

**18.** Câble de commande selon la revendication 9, dans lequel ledit élément en forme de corde est revêtu d'une matière à bas point de fusion.

**19.** Câble de commande selon la revendication 18, dans lequel le point de fusion ou le point de ramollissement de la matière à bas point de fusion est compris dans la plage de 40 à 100°C.

# FIG. 1

# FIG.2

# FIG.3

# FIG.4

# FIG.5

# FIG.6

# FIG.7

# F I G.8

# F I G.9

1000 mm

# F I G.10

# F I G.11

## EXAMPLE 1

# F I G.12

## EXAMPLE 3

# F I G.13

## EXAMPLE 7

# F I G.14

## COMPARATIVE EXAMPLE 1

# F I G.15

## COMPARATIVE EXAMPLE 3

# F I G .16
## PRIOR ART